# EUROPÄISCHE PATENTSCHRIFT

(11) **EP 0 863 340 B1**
(45) Veröffentlichungstag und Bekanntmachung des Hinweises auf die Patenterteilung: **28.08.2002**
(21) Anmeldenummer: 97121525.6
(22) Anmeldetag: 06.12.1997
(51) Int. Cl.: F16K 5/02

(54) **Demontierbarer Hahn**
Demountable cock
Robinet démontable

(30) Priorität: 05.03.1997 DE 19708884
(43) Veröffentlichungstag der Anmeldung: 09.09.1998
(73) Patentinhaber: Richard Wolf GmbH, 75438 Knittlingen (DE)
(72) Erfinder: Heimberger, Rudolf, 75038 Oberderdingen (DE)
(74) Vertreter: Vollmann, Heiko, Dipl.-Ing.

(56) Entgegenhaltungen:
- EP-A- 0 733 836
- DE-A- 4 226 770
- DE-B- 1 149 213
- DE-U- 29 502 279
- US-A- 3 779 513
- US-A- 3 788 599
- US-A- 3 788 602

## Beschreibung

Diese Erfindung betrifft einen Hahn mit einem Gehäuse und einem im Gehäuse drehbaren Küken, das in seiner Arbeitsposition mit Dichtflächen gegen Dichtflächen des Gehäuses anliegt und unter Aufhebung seiner lösbaren Verbindung mit dem Gehäuse aus der Arbeitsposition in eine Zwischenposition bringbar ist, bei der sich die Dichtflächen außer Anlage befinden und das Gehäuse sowie das Küken verbunden bleiben.

Ein solcher demontierbarer Hahn ist aus dem deutschen Gebrauchsmuster 295 02 279.5 bekannt. Bei diesem bekannten Hahn ist durch den unteren Teil des Kükens ein querliegender Verriegelungsbolzen gesteckt, der mit seinen Enden über den Umfang des unteren Teils des Kükens hinausragt. Quer zum Durchgangskanal und zur Achse des Kükens ist in das Hahngehäuse mindestens ein Querschlitz als Aussparung eingebracht, der nach oben in Richtung eines Griffes zeigt und in den ein überstehendes Ende des Verriegelungsbolzens ragt. Dabei enden der oder die Querschlitze innerhalb des Gehäuses unter dem restlichen Gehäuseteil, das den oberen Anschlag für ein Bolzenende bildet. Auf diese Weise sind die Einzelteile des Hahns bei der Zerlegung zum Zwecke der Reinigung verliersicher miteinander verbunden. Bei diesem Hahn der bekannten Bauart ist es nachteilig, daß relativ viele Teile und unterschiedliche Werkstoffe nötig sind, so daß er nur relativ komplex und teuer herstellbar ist.

Besonders im biologischen/medizinischen Bereich muß darauf geachtet werden, daß ein vielseitig einsetzbarer Hahn zum Reinigen durch Spülen und zur Desinfektion leicht demontierbar ist, wobei die Teile aber beieinander bleiben sollen, und daß er aus wenigen Teilen und mit geringem Kostenaufwand herstellbar ist.

Somit ist es Aufgabe der Erfindung, einen besonders für biologische/medizinische Anwendung geeigneten demontierbaren Hahn zu schaffen, der mit wenigen Teilen unter Einsatz möglichst weniger verschiedener Werkstoffe billig so herstellbar ist, daß er auch nur teilweise demontierbar ist und daß in diesem Zustand die Einzelteile miteinander verbunden bleiben und dennoch einwandfrei gereinigt und desinfiziert werden können.

Ein die obige Aufgabe lösender demontierbarer Hahn der eingangs erwähnten Art ist erfindungsgemäß dadurch gekennzeichnet, daß eine flexible Verrastung zwischen Küken und Gehäuse vorgesehen ist, derart, dass das Küken in seiner Arbeitsposition mit dem Gehäuse form- und kraftschlüssig verrastet ist und unter Überwindung dieser flexiblen Verrastung in die Zwischenposition bewegbar ist, in der das Küken mit dem Gehäuse ebenfalls form- und kraftschlüssig verrastet ist.

Durch die erfindungsgemäße Gestaltung des Hahnkükens und der flexiblen Verrastung mit den komplementären Rastmitteln am Hahngehäuse läßt sich der Hahn auf einfachste Art montieren und demontieren. Die Zahl der Einzelteile des erfindungsgemäßen Hahns ist im wesentlichen auf zwei bis drei Teile reduziert. Vorzugsweise ist das Küken als Spritzteil ausgeführt, wodurch erstens eine optimale Materialkombination erreicht und zweitens der die Verrastung bewirkende Schnappverschluß ohne großen Aufwand realisiert werden kann. Ein insbesondere aus rostfreiem Stahl oder einer Nickel-Titan-Legierung oder auch aus Elastomeren bestehender Federring kann bei einer Ausführungsart die elastische Verrastung zwischen Küken und Hahngehäuse bewirken.

Durch die zweistufige flexible Verrastung ist es möglich, neben der Arbeitsposition eine Reinigungsposition als Zwischenposition nur durch Rasten zu erreichen. Der zwischen den Dichtflächen des Kükens und des Hahngehäuses in der Zwischenposition entstehende Spalt ist für eine Desinfektion oder Spülung ausreichend und läßt ein Einwirken des Spül- oder Desinfektionsmittels auf die Dichtflächen zu, ohne daß der Hahn komplett demontiert werden muß.

Weitere vorteilhafte Merkmale des erfindungsgemäßen Hahns sind in Unteransprüchen angegeben.

Anhand der beiliegenden Zeichnung werden nachfolgend einige Ausführungsbeispiele des Hahns nach der Erfindung beschrieben. Es zeigt:
- Fig. 1: schematisch einen Teilschnitt einer ersten Ausführungsform eines demontierbaren Hahns,
- Fig. 2: eine besondere Ausführungsform der Erfindung, bei der die Bewegung des Hahnkükens von der Arbeitsposition in die Zwischenposition auf mechanischem Wege möglich ist,
- Fig. 3: in einem schematischen Teilquerschnitt eine zweite Ausführungsform eines demontierbaren Hahns gemäß der Erfindung, die mit nur zwei Teilen auskommt und
- Fig. 4: einen Längsschnitt durch einen demontierbaren Hahn einer dritten Ausführungsform der Erfindung.

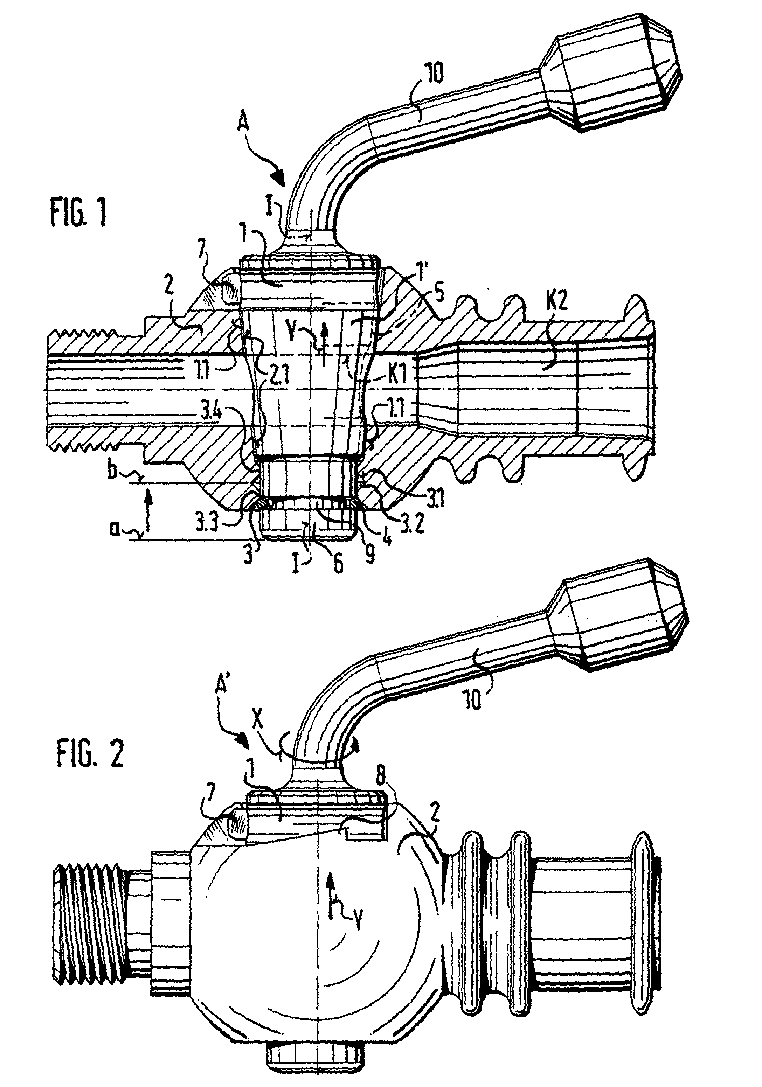

Bei der in Fig. 1 dargestellten und mit dem Buchstaben A bezeichneten ersten erfindungsgemäßen Ausführungsform sitzt das sich nach unten verjüngende, im wesentlichen konisch geformte Hahnküken 1 in einer komplementär konisch geformten Aufnahme des Hahngehäuses 2. Die Aufnahme des Gehäuses 2 und das Küken 1. liegen in der dargestellten Arbeits- bzw. Betriebsposition in an sich bekannter Weise mit Dichtflächen 1.1 und 2.1 gegeneinander an. Am unteren Ende 6 des Kükens 1 und des Gehäuses 2 sind jeweils komplementäre und form- und kraftschlüssig in Eingriff bringbare erste und zweite Rastmittel 3, 3.1, 3.2 und 4 vorgesehen. Das Gehäuse 2 weist zwei parallele Ringschultern 3 und 3.1 auf, die durch eine Ringnut 3.2 mit einem nach innen zur Achse I-I gerichteten Vorsprung 3.3 voneinander getrennt sind. Das Küken 1 hat an seinem unteren Ende 6 eine Ringnut 9, in der eine Ringfeder 4 liegt.

Beim Einsetzen des Kükens 1 in das Hahngehäuse 2 wird die Ringfeder 4 unter elastischer Verformung über einen die innere Ringschulter 3.1 bildenden ringförmigen Vorsprung 3.4 des Gehäuses 2 gedrückt, wobei die Ringfeder 4 zunächst in die Ringnut 3.2 des Gehäuses 2 schnappt (Zwischenposition b). Wenn dann weiterhin Druck auf das Küken 1 von oben ausgeübt wird, schnappt die Ringfeder 4 über den die äußere Ringschulter 3 bildenden ringförmigen Vorsprung 3.3 des Hahngehäuses 2 und liegt dann an dieser Ringschulter 3 an. Das Küken sitzt dann in seiner Arbeitsposition a im Gehäuse 2.

Durch einen entgegengesetzt gerichteten Druck in Richtung Y auf das untere Ende 6 des Kükens 1 oder durch Zug in der Richtung Y am oberen Ende des Kükens 1 kann dieses unter umgekehrt wie bei der Montage erfolgenden Abläufen wieder in die Zwischenposition b gebracht werden, bei der sich zwischen dem teilweise und gestrichelt angedeuteten Hahnküken 1 und der Kegelaufnahme des Gehäuses 2 ein Ringraum 5 befindet, der frei vom Desinfektions- oder Spülmittel durchströmt werden kann.

Übt man auf das untere Ende 6 des Kükens 1 in der vorher erwähnten Zwischenstellung b nochmals Druck in Richtung Y aus, so kommt das Küken 1, nachdem die Ringfeder 4 den die Ringschulter 3.1 tragenden Gehäusevorsprung 3.4 unter elastischer Verformung überlaufen hat, frei und kann vollständig aus der Kegelaufnahme des Hahngehäuses 2 gezogen oder gedrückt werden.

Oben am Küken 1 sitzt ein Betätigungshebel 10, mit dem das Küken von Hand um seine Achse I-I verdreht werden kann, um dessen Durchgang K1 in üblicher Weise in mehr oder weniger weite Überdeckung mit dem Durchgangskanal K2 im Hahngehäuse 2 bringen zu können. Zum vollständigen Sperren wird natürlich der Durchgang K1 im Hahnküken vollkommen außer Überdeckung mit dem Kanal K2 gebracht.

Das Erreichen der Zwischenposition b bzw. das Entnehmen des Hahnkükens 1 aus der Kegelaufnahme des Hahngehäuses 2 kann auch dadurch ermöglicht werden, daß, wie die in Fig. 2 dargestellte Ausführungsform A' zeigt, ein die Drehbewegung X des Hahnkükens beschränkender Stift oder eine Nase 7 nach Erreichen eines bestimmten Schwenkwinkels auf einen rampenförmigen Vorsprung 8 läuft, wodurch das Hahnküken 1 axial in Richtung des Pfeils Y verschoben wird, wobei die Ringfeder 4 unter Verformung die Ringschulter 3 überwindet und in der die Zwischenposition b definierende Ringnut 3.2 zu liegen kommt und diese in Fig. 1 teilweise und gestrichelt angedeutete Zwischenposition unter Bildung des Ringraums 5 (Fig. 1) zwischen Hahnküken 1 und Hahngehäuse 2 erreicht ist.

Bei den in den Figuren 1 und 2 gezeigten Ausführungsformen A und A' besteht der Hahn nur aus drei Einzelteilen, nämlich dem Küken 1, dem Hahngehäuse 2 und der Ringfeder 4. Die Ringfeder 4 kann aus nichtrostendem Federstahl oder einem Buntmetall hergestellt sein. Sie kann aber auch aus einem Elastomerring bestehen. Das Hahnküken 1 kann zweckmäßigerweise als Spritzteil hergestellt werden, was die Herstellungskosten gering hält.

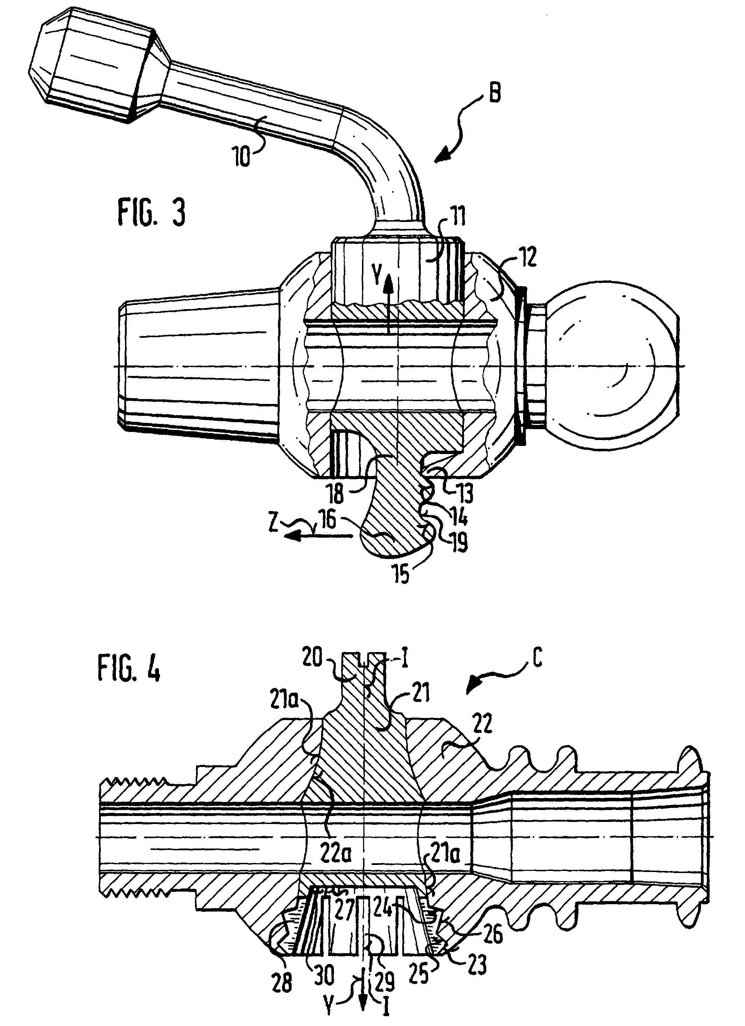

Fig. 3 zeigt eine mit B bezeichnete alternative Ausführungsform eines erfindungsgemäßen Hahns, die mit nur zwei Einzelteilen auskommt. Das untere Ende des Hahnkükens 11, das dem Betätigungshebel 10 gegenüberliegt, hat einen radial zur Drehachse des Hahnkükens in Richtung des Pfeils Z federnd auslenkbaren, im wesentlichen zentral und in axialer Richtung ragenden Fortsatz 16. Die elastische Eigenschaft dieses Fortsatzes 16 in Z-Richtung wird durch einen sich nach oben anschließenden verjüngten Abschnitt 18 ermöglicht.

Am Fortsatz 16 sind eine erste Rastschulter 14 und eine zweite Rastschulter 15 ausgebildet, und in der in Fig. 3 dargestellten Arbeitsposition greift ein komplementär ausgebildeter, nach innen ragender Vorsprung 13 des Hahngehäuses 12 an der ersten Rastschulter 14 des Hahnkükens 11 an. Wenn das Hahnküken 11 am Hebel 10 nach oben, d.h. in Richtung Y, gezogen oder Druck auf den axialen Vorsprung 16 des Hahnkükens 11 in Y-Richtung ausgeübt wird oder wenn alternativ der axiale Fortsatz 16 von Hand in Z-Richtung abgebogen und das Hahnküken gezogen wird, wird der Vorsprung 13 des Hahngehäuses 12 schließlich in die zwischen den Rastschultern 14 und 15 gebildete Einbuchtung 19 gleiten, so daß das Hahnküken 11 unter Bildung eines freien Ringraums, vergleichbar dem Ringraum 5 in Fig. 1, zwischen Küken 11 und Hahngehäuse 12 eine in Fig. 3 nicht gezeigte Zwischenposition einnimmt, bei welcher der teilweise demontierte Hahn gespült wird, während die beiden Teile 11 und 12 noch unverlierbar zusammenhängen.

Erst wenn weiterhin auf das Küken 11 Zug oder Druck in Y-Richtung ausgeübt wird, kommt die Rastschulter 15 unter elastischer Auslenkung des Fortsatzes 16 in Richtung Z auch über den Vorsprung 13 hinweg, so daß das Hahnküken 11 frei und vollständig aus dem Gehäuse 12 gezogen werden kann. Auch bei der in Fig. 3 gezeigten Ausführungsform B kann das Hahnküken 11 vorteilhafterweise aus einem Spritzteil aus biokompatiblem Kunststoff, z.B. aus Teflon, hergestellt sein.

Nachstehend wird bezogen auf Figur 4 eine weitere mit C bezeichnete Ausführungsform eines erfindungsgemäßen Hahns beschrieben. Die auch die Dichtflächen bildenden Konusflächen des Hahnkükens 21 und des Hahngehäuses 22 verlaufen umgekehrt im Vergleich zu den in den Figuren 1 bis 3 dargestellten Ausführungsformen A, A' und B, d.h. sie werden vom oberen ein Drehorgan 20 aufweisenden Ende des Kükens 21 zum unteren Ende des Kükens hin im Durchmesser weiter. Das Hahnküken 21 kann bezogen auf seine Drehachse I-I axialsymmetrisch sein. Das Drehorgan 20 am oberen Ende des Kükens kann als ein mit einem Schlitz für einen Schraubendreher versehener Fortsatz des Kükens 21 geformt sein.

In der in Fig. 4 gezeigten Arbeitsposition liegt das Hahnküken 21 mit seinen Dichtflächen 21a eng und drehbar gegen die Dichtflächen 22a in der Aufnahme des Hahngehäuses 22. Das sich konisch erweiternde, dem Drehorgan 20 gegenüberliegende untere Ende des Hahnkükens 21 hat eine zentrale Bohrung oder Vertiefung 27, so daß ein in radialer Richtung flexibler Wandteil 28 entsteht. Die Flexibiltät wird insbesondere durch einen verjüngten Wandabschnitt 30 im Bereich des Bodens der Vertiefung 27 erreicht. Die Außenperipherie dieses ringförmigen flexiblen Wandabschnitts 28 weist zwei konzentrisch und parallel ausgebildete Ringschultern 24 und 25 auf, die in der in Fig. 4 gezeigten Arbeitsposition des Hahns an komplementär ausgebildeten Ringschultern 26, 23 des Hahngehäuses 22 anliegen.

Wenn Druck oder Zug auf das Hahnküken 21 in Richtung des Pfeils Y ausgeübt wird, wird es unter Überwindung der Federkraft des dabei elastisch nach außen ausgelenkten Wandabschnitts 28 aus der dargestellten Arbeitsposition in eine in Fig. 4 nicht gezeigte Zwischenposition verschoben, bei der die Ringschulter 24 des Hahnkükens 21 an der Ringschulter 23 des Hahngehäuses 22 anliegt und sich die Dichtflächen 22a, 21a am Gehäuse und Hahnküken außer Anlage befinden und somit ein zum Spülen oder Desinfizieren ausreichender Ringraum zwischen Hahnküken 21 und Hahngehäuse 22 entstanden ist. Wenn weiterhin Druck auf das Hahnküken 21 in Richtung des Pfeils Y ausgeübt wird, kommt die Ringschulter 24 des Hahnkükens 21 auch von der Ringschulter 23 des Hahngehäuses 22 frei, und das Hahnküken 21 kann vollständig aus dem Hahngehäuse 21 herausgenommen werden.

Um die Federwirkung des ringförmigen flexiblen Wandabschnitts 28 des Hahnkükens 21 zu verbessern, kann dieser Wandabschnitt 28 in Umfangsrichtung gleichmäßig beabstandete radial geführte Einschnitte 29 haben, die den Wandabschnitt 28 in einzelne flexible Segmente unterteilen, die am Boden der den ringförmigen Wandabschnitt 28 bildenden Vertiefung 27 zusammenhängen. Es muß noch erwähnt werden, daß die Fig. 4 die Konizität des Hahnkükens 21 und der Aufnahme des Gehäuses 22 und auch die Größe der die Rastmittel bildenden Ringschultern 23-26 am Gehäuse 22 und am Hahnküken 21 zur Verdeutlichung übertrieben groß darstellt.

Auch das axialsymmetrisch ausgebildete Küken der Ausführungsform C gemäß Figur 4 läßt sich als Spritzteil z.B. unter Verwendung eines Elastomers herstellen. Außerdem besteht auch in diesem Fall der Hahn lediglich aus zwei Einzelteilen, nämlich dem Küken 21 und dem Hahngehäuse 22.

Von besonderer Bedeutung ist bei allen Ausführungsformen, daß die jeweiligen Rastmittel so ausgebildet sind und wirken, daß sie bei in Arbeitsposition befindlichem Hahnküken dessen Dichtflächen stets in engem Kontakt mit den Dichtflächen in der Aufnahme des Hahngehäuses halten und daß in diesem Zweck also keine zusätzlichen Halte- und Federmittel erforderlich sind.

## Patentansprüche

1. Hahn mit einem Gehäuse (2,12,22) und einem im Gehäuse drehbaren Küken (1,11,21), das in seiner Arbeitsposition (a) mit Dichtflächen gegen Dichtflächen des Gehäuses (2,12,22) anliegt und unter Aufhebung seiner lösbaren Verbindung mit dem Gehäuse aus der Arbeitsposition (a) in eine Zwischenposition (b) bringbar ist, bei der sich die Dichtflächen außer Anlage befinden und das Gehäuse sowie das Küken verbunden bleiben, **dadurch gekennzeichnet, daß** eine flexible Verrastung zwischen Küken und Gehäuse vorgesehen ist, derart, dass das Küken (1,11,21) in seiner Arbeitsposition (a) mit dem Gehäuse (2,12,22) form- und kraftschlüssig verrastet ist und unter Überwindung dieser flexiblen Verrastung in die Zwischenposition (b) bewegbar ist, in der das Küken mit dem Gehäuse ebenfalls form- und kraftschlüssig verrastet ist.

2. Hahn nach Anspruch 1, **dadurch gekennzeichnet, daß** das Küken (1; 11; 21) konisch und mit dem im Gehäuse steckenden Abschnitt im wesentlichen axialsymmetrisch ausgebildet ist, in der Arbeitsposition in einer komplementär konisch geformten Aufnahme des Gehäuses (2; 12; 22) passend sitzt und an seiner Peripherie erste Rastmittel (4; 14, 15; 24, 25) hat und daß die Aufnahme des Gehäuses zweite Rastmittel (3, 3'; 13; 23, 26) aufweist, die mit den ersten Rastmitteln verrastbar sind.

3. Hahn nach Anspruch 2, **dadurch gekennzeichnet, daß** die ersten Rastmittel (4, 9) eine Ringnut (9) an dem dem Drehorgan des Kükens entgegengesetzten Ende (6) und eine in der Ringnut (9) elastisch kompressibel sitzende Ringfeder (4) aufweisen, deren Außenperipherie über die Peripherie des Kükenendes ragt, und daß die zweiten Rastmittel zumindest eine erste Ringschulter (3) am Gehäuse aufweisen, gegen die die Ringfeder (4) in der Arbeitsposition (a) des Kükens eng anliegt.

4. Hahn nach Anspruch 3, **dadurch gekennzeichnet, daß** die zweiten Rastmittel am Gehäuse ferner eine zweite Ringschulter (3.1) in Richtung zum Durchlaßkanal parallel und konzentrisch zur ersten Ringschulter (3) und eine zwischen der ersten und zweiten Ringschulter (3, 3.1) parallel und konzentrisch verlaufende Ringnut (3.2) aufweisen, derart, daß die Ringfeder (4) bei der Zwischenposition (b) des Kükens (1) in der Ringnut (3.2) liegt und dabei an der zweiten Ringschulter (3.1) anliegt.

5. Hahn nach einem der Ansprüche 1 bis 4, **dadurch gekennzeichnet, daß** das Küken (1) weiterhin eine in eine abschnittsweise ringförmige Aussparung des Gehäuses (2) eingreifende und die Drehbewegung des Kükens begrenzende Nase (7) hat und daß eine Zug- oder Druckkraft auf das Küken (1) durch dessen Verdrehung ausübbar ist, bei der die Nase (7) nach Erreichen eines bestimmten Drehwinkels auf einen rampenförmigen Vorsprung (8) des Gehäuses (2) läuft und bei weiterer Verdrehung in diesem Drehsinn das Küken in eine Richtung (Y) bewegt wird, um es in die Zwischenposition (b) zu bringen.

6. Hahn nach einem der Ansprüche 3 bis 5, **dadurch gekennzeichnet, daß** die Ringfeder (4) aus rostfreiem Federstahl besteht.

7. Hahn nach einem der Ansprüche 3 bis 5, **dadurch gekennzeichnet, daß** die Ringfeder (4) aus einer Nickel-Titan-Legierung besteht.

8. Hahn nach einem der Ansprüche 1 bis 7, **dadurch gekennzeichnet, daß** die ersten Rastmittel am Hahnküken (10; 21) einen seitlich federnd auslenkbaren Endabschnitt (16; 28) mit parallelen Schultern (14, 15; 24, 25) aufweisen.

9. Hahn nach Anspruch 8, **dadurch gekennzeichnet, daß** die zweiten Rastmittel am Gehäuse durch einen Vorsprung (13) gebildet sind.

10. Hahn nach Anspruch 8, **dadurch gekennzeichnet, daß** der radial federnd ausgebildete Endabschnitt des Kükens (21) eine flexible periphere Ringwand bildet, die durch eine zentrale Bodenaussparung (27) im genannten Endabschnitt gebildet ist, und daß die Schulter (24, 25) der ersten Rastmittel um die Außenperipherie der Ringwand (28) laufen.

11. Hahn nach Anspruch 10, **dadurch gekennzeichnet, daß** die Ringwand (28) durch in ihrer Umfangsrichtung gleichmäßig beabstandete, radiale Einschnitte (29) in einzelne flexible Segmente unterteilt ist, die im Bereich des Bodens der die Ringwand bildenden Bodenaussparung (27) zusammenhängen.

## Claims

1. A cock with a housing (2, 12, 22) and with a plug (1, 11,21) which is rotatable in the housing, which in its working position (a) bears with sealing surfaces against sealing surfaces of the housing (2, 12, 22) and when lifted from of its releasable connection to the housing may be brought from the working position (a) into an intermediate position (b) in which the sealing surfaces are out of contact and the housing as well as the plug remain connected, **characterised in that** a flexible locking is provided between the plug and the housing such that the plug (1; 11, 21) in its working position (a) is locked with the housing (2, 12, 22) with a positive and non-positive fit and on overcoming this flexible locking is movable into the intermediate position (b) in which the plug is also locked with a positive non-positive fit with the housing.

2. A cock according to claim 1, **characterised in that** the plug (1; 11; 21) is conical and with the section inserted in the housing is formed essentially axially symmetrical, in the working position is fittingly seated in a complementarily conically shaped receiver of the housing (2; 12; 22) and on its periphery has a first locking means (4; 14; 15; 24, 25), and that the receiver of the housing comprises a second locking means (3, 3'; 13; 23, 26) which is lockable with the first locking means.

3. A cock according to claim 2, **characterised in that** the first locking means (4, 9) comprises an annular groove (9) at the end (6) opposite the rotary organ of the plug and an annular spring (4) which is seated elastically compressible in the annular groove (9) and whose outer periphery projects beyond the periphery of the plug end, and that the second locking means comprises at least one first annular shoulder (3) on the housing against which the annular spring (4) tightly bears in the working position (a) of the plug.

4. A plug according to claim 3, **characterised in that** the second latching means on the housing further comprises a second annular shoulder (3.1) in the direction of the passage channel parallel and concentric to the first annular shoulder (3) and an annular groove (3.2) running parallel and concentric between the first and second annular shoulder (3, 3.1) in a manner such that the annular spring (4) with the intermediate position (b) of the plug (1) lies in the annular groove (3.2) and at the same time bears on the second annular shoulder (3.1).

5. A cock according to one of the claims 1 to 4, **characterised in that** the plug (1) furthermore has a lug (7) which engages into relief of the housing, said relief being annular in sections, and which limits the rotational movement of the plug, and that the tensile or compression force onto the plug (7) is exertible by its rotation in which the lug (7) on reaching a certain rotational angle runs on a ramp-shaped projection (8) of the housing (2) and with a further rotation in this rotational direction the plug is moved in the direction (Y) in order to bring it into the intermediate position (b).

6. A cock according to one of the claims 3 to 5, **characterised in that** the annular spring (4) consists of stainless spring steel.

7. A cock according to one of the claims 3 to 5, **characterised in that** the annular spring (4) consists of a nickle-titanium alloy.

8. A cock according to one of the claims 1 to 7, **characterised in that** the first locking means on the cock plug (10; 21) comprises a laterally resiliently deflectable end section (16; 28) with parallel shoulders (14, 15; 25, 25).

9. A cock according to claim 8, **characterised in that** the second locking means on the housing is formed by a projection (13).

10. A cock according to claim 8, **characterised in that** the radially resiliently formed end section of the plug (21) forms a flexible peripheral annular wall which is formed by a central base relief (27) in the mentioned end section, and that the shoulder (24, 25) of the first locking means run around the outer periphery of the annular wall (28).

11. A cock according to claim 10, **characterised in that** the annular wall (28) is divided by radial incisions uniformly distanced in its circumferential direction into individual segments which are joined together in the region of the base of the base relief (27) forming the annular wall.

## Revendications

1. Robinet comportant un corps de robinet et, monté rotatif dans ce corps, un boisseau qui, dans sa position de travail (a), s'appuie avec des surfaces d'étanchéité contre des surfaces d'étanchéité du corps, et qui, par interruption de sa liaison démontable avec le corps, peut être amené de sa position de travail dans une position intermédiaire (b) pour laquelle les surfaces d'étanchéité se trouvent hors d'appui réciproque et pour laquelle le corps de robinet ainsi que le boisseau restent reliés, **caractérisé en ce qu'** un encliquetage flexible est prévu entre le boisseau et le corps de robinet de facon que le boisseau (1 ; 11 ; 21), dans sa position de travail (a), est encliqueté par une liaison par complémentarité de forme et par adhérence avec le corps (2; 12; 20), et peut être déplacé dans la position intermédiaire (b) en surmontant cet encliquetage flexible dans laquelle position intermediaire le boisseau est encliqueté pareillement par une liaison par complémentarité de forme et par adhérence avec le corps de robinet.

2. Robinet selon la revendication 1, **caractérisé en ce que** le boisseau (1; 11 ; 21) est d'une configuration conique et sa partie emmanchée dans le corps présente sensiblement une symétrie axiale, **en ce que** le boisseau, dans la position de travail, est logé de manière ajustée dans un logement de forme conique complémentaire du corps (2; 12; 22) et possède sur sa périphérie, des premiers moyens d'encliquetage (4; 14, 15; 24, 25), et **en ce que** le logement du corps présente des seconds moyens d'encliquetage (3, 3" 13; 23, 26) qui peuvent s'encliqueter avec les premiers moyens d'encliquetage.

3. Robinet selon la revendication 2, **caractérisé en ce que** les premiers moyens d'encliquetage (4, 9) comprennent une rainure annulaire (9) à l'extrémité (6) opposée à celle de l'organe de rotation du boisseau, et un ressort annulaire (4) logé de manière élastiquement compressible dans la rainure annulaire (9) et dont la périphérie extérieure fait saillie de la périphérie de l'extrémité du boisseau, et **en ce que** les seconds moyens d'encliquetage présentent au moins un premier épaulement annulaire (3) sur le corps, contre lequel s'appuie étroitement le ressort annulaire (4), dans la position de travail (a) du boisseau.

4. Robinet selon la revendication 3, **caractérisé en ce que** les seconds moyens d'encliquetage sur le corps présentent par ailleurs un second épaulement annulaire (3.1) en direction du canal de passage, de manière parallèle et concentrique au premier épaulement annulaire (3), et une seconde rainure annulaire (3.2) s'étendant de manière parallèle et concentrique entre le premier et le second épaulement annulaire (3, 3.1), de façon telle que le ressort annulaire (4), pour la position intermédiaire (b) du boisseau (1), se trouve dans la seconde rainure annulaire (3.2) et s'appuie à cette occasion sur le second épaulement annulaire (3.1).

5. Robinet selon l'une des revendications 1 à 4, **caractérisé en ce que** le boisseau (1) comporte par ailleurs un appendice (7) s'engageant dans un évidement en forme de tronçon annulaire du corps (2) et limitant le mouvement de rotation du boisseau, et **en ce que** la force de traction ou de compression sur le boisseau (1) est èxerceable par la rotation de ce dernier, lors de laquelle l'appendice (7), après avoir atteint un angle de rotation déterminé, monte sur une protubérance en forme de rampe (8) du corps (2), le boisseau étant déplacé dans la direction (Y) lors de la poursuite de la rotation dans ce sens de rotation, pour l'amener dans la position intermédiaire (b).

6. Robinet selon l'une des revendications 3 à 5, **caractérisé en ce que** le ressort annulaire (4) est réalisé en un acier à ressort inoxydable.

7. Robinet selon l'une des revendications 3 à 5, **caractérisé en ce que** le ressort annulaire (4) est réalisé en un alliage de nickel et de titane.

8. Robinet selon l'une des revendications 1 à 7, **caractérisé en ce que** les premiers moyens d'encliquetage sur le boisseau de robinet (10; 21) comprennent un tronçon d'extrémité (16; 28) pouvant être dévié latéralement, de manière élastique, et comportant des épaulements parallèles (14, 15; 24, 25).

9. Robinet selon la revendication 8, **caractérisé en ce que** les seconds moyens d'encliquetage sont formés sur le corps de robinet, par une protubérance (13).

10. Robinet selon la revendication 8, **caractérisé en ce que** le tronçon d'extrémité du boisseau (21), élastique dans la direction radiale, forme une paroi annulaire périphérique flexible, qui est formée par un évidement de fond central (27) dans ledit tronçon d'extrémité, et **en ce que** les épaulements (24, 25) des premiers moyens d'encliquetage s'étendent autour de la périphérie extérieure de la paroi annulaire (28).

11. Robinet selon la revendication 10, **caractérisé en ce que** la paroi annulaire (28) est subdivisée par des encoches radiales (29) régulièrement espacées sur sa direction périphérique, en segments individuels flexibles, qui se raccordent les uns aux autres dans la zone du fond de l'évidement de fond (27) formant la paroi annulaire.
